# EUROPÄISCHE PATENTSCHRIFT

(11) **EP 3 542 062 B1**
(45) Veröffentlichungstag und Bekanntmachung des Hinweises auf die Patenterteilung: **19.05.2021**
(21) Anmeldenummer: 17801682.0
(22) Anmeldetag: 16.11.2017
(51) Int. Cl.: F04B 39/00, F04B 39/12

(54) **KÄLTEMITTELKOMPRESSOR**
REFRIGERANT COMPRESSOR
COMPRESSEUR DE FLUIDE DE REFROIDISSEMENT

(30) Priorität: 18.11.2016 AT 5024316 U
(43) Veröffentlichungstag der Anmeldung: 25.09.2019
(73) Patentinhaber: Secop GmbH, 24939 Flensburg (DE)
(72) Erfinder: STEEN, Helge, 24782 Büdelsdorf (DE); BRUNE, Fabian, 24937 Flensburg (DE); NIELSEN, Sven-Eric, 24944 Flensburg (DE)
(74) Vertreter: KLIMENT & HENHAPEL
(86) Internationale Anmeldenummer: PCT/EP2017/079488
(87) Internationale Veröffentlichungsnummer: WO 2018/091596

(56) Entgegenhaltungen:
- WO-A1-2015/013793
- AT-U1- 9 772
- DE-A1-102005 047 121
- DE-A1-102007 048 936
- DE-T2- 60 031 540
- US-A1- 2009 243 170
- US-A1- 2012 269 661
- Anonymous: "Rubber Hardness Chart, Rubber Durometer Scale - Mykin Inc", , 31. Januar 2018 (2018-01-31), XP055446500, Gefunden im Internet: URL:http://mykin.com/rubber-hardness-chart [gefunden am 2018-01-31]

## Beschreibung

### GEBIET DER ERFINDUNG

Die Erfindung betrifft einen Kältemittelkompressor, umfassend ein hermetisch kapselbares Kompressorgehäuse sowie eine in einem Gehäuseinneren des Kompressorgehäuses angeordnete Verdichter-Motor-Einheit, welche über zumindest ein Federelement elastisch an einer Innenseite des Kompressorgehäuses gelagert ist, wobei zumindest ein aus einem Elastomer gefertigtes Dämpfungselement vorgesehen ist, um die Übertragung von durch die Verdichter-Motor-Einheit hervorgerufenen Schwingungen auf das Kompressorgehäuse zu dämpfen.

### STAND DER TECHNIK

Kältemittelkompressoren mit einer Verdichter-Motoreinheit, welche über ein oder mehrere Federelemente elastisch an einer Innenseite eines hermetisch kapselbaren Kompressorgehäuses gelagert ist, sind hinreichend bekannt, siehe z. B. DE 10 2005 047 121 A1.

Die Funktionsweise solcher Kältemittelkompressoren lässt sich im Wesentlichen wie folgt skizzieren: Eine mittels eines Elektromotors angetriebene Kurbelwelle lässt einen in einem Zylinderblock beweglich gelagerten Kolben eine periodische Linearbewegung zwischen zwei Totpunkten des Zylinders ausführen, wodurch in einem Ansaugtakt des Kältemittelkompressors Kältemittel zunächst über eine Einlassöffnung des Kompressorgehäuses in das Gehäuseinnere und in weiterer Folge aus dem Gehäuseinneren in den Zylinderblock gesaugt und in einem anschließenden Verdichtungstakt komprimiert wird. Am Ende eines jeden Verdichtungstaktes wird das komprimierte Kältemittel aus dem Zylinderblock ausgeschoben und über eine Drucklinie zu einer Auslassöffnung des Kompressorgehäuses befördert. Durch die Bewegung des Kolbens und der Kurbelwelle treten dabei - je nach Betriebsmodus des Kältemittelkompressors - Vibrationen auf, welche über die elastische Lagerung der Verdichter-Motor-Einheit in Form der Federelemente zunächst auf das Kompressorgehäuse und in weiterer Folge auf die Umgebung des Kältemittelkompressors übertragen werden und zu einer - mitunter - erheblichen Lärmentwicklung führen können.

### AUFGABE DER ERFINDUNG

Eine Aufgabe der vorliegenden Erfindung ist es daher, einen Kältemittelkompressor vorzusehen, bei dem die Lärmentwicklung auf ein den Anforderungen verschiedener Anwendungsgebiete entsprechendes Mindestmaß reduziert werden kann.

### DARSTELLUNG DER ERFINDUNG

Diese Aufgabe wird bei einem Kältemittelkompressor, umfassend ein hermetisch kapselbares Kompressorgehäuse sowie eine in einem Gehäuseinneren des Kompressorgehäuses angeordnete Verdichter-Motor-Einheit, welche über zumindest ein Federelement elastisch an einer Innenseite des Kompressorgehäuses gelagert ist, wobei zumindest ein aus einem Elastomer gefertigtes Dämpfungselement vorgesehen ist, um die Übertragung von durch die Verdichter-Motor-Einheit hervorgerufenen Schwingungen auf das Kompressorgehäuse zu dämpfen, gelöst, indem das zumindest eine Dämpfungselement aus einem im Vergleich zu Polyamid (PA), Polybutylenterephthalat (PBT), Ethylenchlortrifluorethylen (ECTFE) weicheren Elastomer gefertigt ist.

Durch die Verwendung eines Elastomers kann die akustische Übertragungsfunktion des Schwingungssystems bestehend aus der Verdichter-Motor-Einheit und dem zumindest einen Federelement derart beeinflusst werden, dass bestimmte Frequenzbereiche gezielt gedämpft bzw. unterdrückt werden können. Insbesondere kann durch den Einsatz des erfindungsgemäßen Dämpfungselementes an bestimmten Positionen bzw. Bauteilen des Kältemittelkompressors ein durch Kollisionen solcher Bauteile untereinander bedingter Geräuschpegel erheblich reduziert werden. Aufgrund der im Vergleich zu herkömmlicherweise in gattungsgemäßen Kältemittelkompressoren verbauten Materialien - insbesondere Metall und Thermoplast - erheblich verringerten Steifigkeit solcher weichen Elastomere und der damit einhergehenden verminderten Schallgeschwindigkeit sind Dämpfungselemente der Erfindung besonders gut zur erwünschten Geräuschreduktion geeignet.

Eine maximale Reduktion des Betriebsgeräusches des Kältemittelkompressors kann erreicht werden, wenn eine Dämpfung oder Unterbrechung des Hauptübertragungspfades von durch die Verdichter-Motor-Einheit hervorgerufenem Körperschall gelingt. Deshalb ist es erfindungsgemäß vorgesehen, dass das zumindest eine Dämpfungselement zwischen dem zumindest einen Federelement und der Innenseite des Kompressorgehäuses oder zwischen dem zumindest einen Federelement und der Verdichter-Motor-Einheit angeordnet ist.

Das zur elastischen Aufhängung der Verdichter-Kolben-Einheit im Gehäuseinneren unerlässliche, zumindest eine Federelement - meist sind mehrere Federelemente vorgesehen, von denen jedes als eine Einzelfeder ausgebildet ist - stellt nämlich den Hauptübertragungspfad des zum Betriebsgeräusch maßgeblich beitragenden Körperschalls des Kältemittelkompressors dar. Die erfindungsgemäße Unterbrechung dieses Pfades mittels des Dämpfungselementes aus Elastomer reduziert daher die Übertragung von Körperschall auf das Kompressorgehäuse und führt darüber hinaus zu einer erheblichen Reduktion von Kollisionsgeräuschen aufgrund von Zusammenstößen zwischen dem Federelement und dem Kompressorgehäuse oder zwischen dem Federelement und der Verdichter-Motor-Einheit.

Um eine optimale Reduktion des Betriebsgeräusches des Kältemittelkompressors zu erreichen, ist es erfindungsgemäß vorgesehen, dass die Shore-A-Härte des Dämpfungselementes einen Wert zwischen 40 und 80, vorzugsweise eine Shore-A-Härte zwischen 50 und 65, besonders bevorzugt eine Shore-A-Härte zwischen 55 und 60, aufweist.

Da das erfindungsgemäß vorgesehene zumindest eine Dämpfungselement den im Gehäuseinneren vorherrschenden hohen Betriebstemperaturen von bis zu 100 °C ausgesetzt und in ständigem Kontakt mit dem sich im Gehäuseinneren befindlichen Öl-Kältemittel-Gemisch ist, kommen vor allem solche Elastomere in Frage, deren Materialeigenschaften ein zu starkes Aufquellen oder gar ein Auflösen des Dämpfungselementes verhindern.

Deshalb ist es erfindungsgemäß vorgesehen, dass das zumindest eine Dämpfungselement aus einem Verbundwerkstoff (im Sinne einer Kunststoff- bzw. Elastomermischung) umfassend Fluorelastomer, hydrierten Acrylnitrilbutadien-Kautschuk und/oder Ethylen-Acrylat-Kautschuk gefertigt ist. Als besonders gut zur Dämpfung geeignet haben sich Dämpfungselemente aus einem mit der Warenbezeichnung *Viton*®-*A 401C* versehenen Elastomer des Herstellers The Chemours Company herausgestellt. Die Zusammensetzung dieses Materials führt zu einer besonders hohen Widerstandsfähigkeit gegenüber Kohlenwasserstoffen bei hohen Temperaturen, welche wiederum zu einer verlängerten Lebensdauer der erfindungsgemäß vorgesehenen Dämpfungselemente führt. Insbesondere gut geeignet sind Fluorelastomere, welche durch Polymerisation zweier Monomere, nämlich Vinylidenfluorid und Hexafluorpropylen, gebildet werden.

Um Kosten zu sparen und den Aufbau erfindungsgemäßer Kältemittelkompressoren besonders einfach zu halten, ist es bei einer weiteren besonders bevorzugten Ausführungsform des erfindungsgemäßen Kältemittelkompressors vorgesehen, dass das zumindest eine Dämpfungselement als ein Lagerungselement oder als ein Teil eines Lagerungselementes ausgebildet ist, über welches Lagerungselement das zumindest eine Federelement, vorzugsweise mittels Kraftschluss, an der Innenseite des Kompressorgehäuses angebunden ist.

Durch ein solches Ersetzen der bei herkömmlichen Kältemittelkompressoren üblicherweise aus Metall oder Thermoplast gefertigten Lagerungselemente durch das erfindungsgemäß vorgesehene Dämpfungselement kann die gewünschte Dämpfung des Hauptübertragungspfades des durch die Verdichter-Motor-Einheit hervorgerufenen Körperschalls erzielt werden, ohne die Anzahl der benötigten Bauteile zu diesem Zweck zu erhöhen. Die Anbindung des Federelementes kann dabei beispielsweise - wie bei bekannten Kompressoren auch - durch Aufschieben des Federelementes auf das Lagerungselement und die sich somit einstellende kraftschlüssige Verbindung zwischen einer äußeren Mantelfläche des Lagerungselementes und einem an dieser Mantelfläche anliegenden Abschnitt des Federelementes erreicht werden. Diese Ausführungsform hat zudem den Vorteil, dass Kollisionen zwischen dem im Betriebszustand des Kältemittelkompressors vibrierenden Federelement und dem Lagerungselement zu einer im Vergleich zu bekannten Kältemittelkompressoren erheblich verringerten Geräuschentwicklung führen.

Um diese Vorteile auch an der Verbindungsstelle zwischen der Verdichter-Motor-Einheit und dem zumindest einen Federelement nützen zu können, ist es bei einer weiteren bevorzugten Ausführungsform der erfindungsgemäßen Kältemittelkompressors vorgesehen, dass das zumindest eine Dämpfungselement als Verbindungselement oder als ein Teil eines Verbindungselementes ausgebildet ist, über welches Verbindungselement das zumindest eine Federelement, vorzugsweise mittels Kraftschluss, an der Verdichter-Motor-Einheit angebunden ist.

Bei einer anderen besonders bevorzugten Ausführungsform des erfindungsgemäßen Kältemittelkompressors ist es vorgesehen, dass das Lagerungselement und/oder das Verbindungselement jeweils ein formgebendes Innenelement sowie ein einen Kontaktabschnitt des Lagerungselementes bzw. des Verbindungselementes ausbildendes Dämpfungselement umfasst.

Dadurch wird es möglich, dem Lagerungselement und/oder dem Verbindungselement jeweils mittels des Innenelementes eine erhöhte Stabilität zu verleihen, um eine übermäßige Auslenkung der Federelemente zu unterbinden, und das Lagerungselement und/oder das Verbindungselement gleichzeitig mit der erfindungsgemäßen Dämpfungsfähigkeit zu versehen.

Um ein Anschlagen des Federelementes an dem im Vergleich zu dem Dämpfungselement härteren Innenelement zu verhindern, ist es bei einer weiteren bevorzugten Ausführungsform des erfindungsgemäßen Kältemittelkompressors vorgesehen, dass das Dämpfungselement das Innenelement an seiner dem Federelement zugewandten Außenseite umhüllt.

Dadurch ist sichergestellt, dass das das Federelement nur mit dem den Kontaktabschnitt des Lagerungselementes bzw. des Verbindungselementes ausbildenden Dämpfungselement in Kontakt geraten kann und Lärm, der durch das Anschlagen des Federelementes an dem Innenelement entstehen würde, vermieden wird.

Auf besonders einfache und kostengünstige Weise kann das das Dämpfungselement umfassende Lagerungselement bzw. Verbindungselement durch Mehrstoff-Spritzgießen hergestellt werden. Dabei wird zunächst das aus einem im Vergleich zu dem Dämpfungselement härtere Innenelement hergestellt und in einem weiteren Verfahrensschritt das weichere Dämpfungselement auf das Innenelement aufgespritzt.

Daher ist es bei einer weiteren besonders bevorzugten Ausführungsform des erfindungsgemäßen Kältemittelkompressors vorgesehen, dass das Lagerungselement und/oder das Verbindungselement als ein Mehrstoff-Spritzgussteil ausgebildet ist.

Darüber hinaus kann bei einer weiteren bevorzugten Ausführungsform des erfindungsgemäßen Kältemittelkompressors eine besonders stabile Anbindung des Federelementes an das als Lagerungselement bzw. Verbindungselement ausgebildete Dämpfungselement erfolgen, indem das zumindest eine Federelement als Schraubenfeder ausgebildet ist und das zumindest eine Dämpfungselement zumindest abschnittsweise in die Schraubenfeder hineinragt.

Der in das Innere der Schraubenfeder hineinragende Abschnitt des Dämpfungselementes hat außerdem eine die Bewegung der Schraubenfeder in horizontaler Richtung begrenzende Funktion und durch die konkrete Wahl der Länge dieses Abschnittes kann darüber hinaus auch der Grad der Schwingungsdämpfung reguliert werden.

Bei einer weiteren besonders bevorzugten Ausführungsform des erfindungsgemäßen Kältemittelkompressors ist es vorgesehen, dass die Verdichter-Motor-Einheit über vier als Schraubenfedern ausgebildete Federelemente an der Innenseite des Kompressorgehäuses gelagert ist, wobei jede Schraubenfeder über zumindest ein Dämpfungselement mit der Verdichter-Motor-Einheit und/oder der Innenseite des Kompressorgehäuses verbunden ist.

Durch eine solche Anordnung kann eine besonders stabile Lagerung der gesamten Verdichter-Motor-Einheit sowie eine optimale Schwingungsdämpfung erzielt werden. Sämtliche Hauptübertragungspfade führen dabei an zumindest einer Stelle, vorzugsweise an zwei Stellen, über jeweils ein Dämpfungselement, was einerseits zu einer erhöhten Reduktion des auf das Kompressorgehäuse übertragenen Körperschalls als auch zu einer drastischen Verminderung kollisionsbedingter Geräuschentwicklung führt.

Bei einer weiteren bevorzugten Ausführungsform des erfindungsgemäßen Kältemittelkompressors ist es vorgesehen, dass das zumindest eine Dämpfungselement kappenförmig ausgebildet ist.

Dadurch kann das als Lagerungselement ausgebildete Dämpfungselement auf einen im Bodenbereich des Kompressorgehäuses angeordneten Befestigungsbolzen und/oder das als Verbindungselement ausgebildete Dämpfungselement auf einen stiftförmigen Fortsatz der Verdichter-Motor-Einheit übergestülpt werden, um einer Geräuschentwicklung entgegenzuwirken.

Darüber hinaus ist es bei einer besonders bevorzugten Ausführungsform des erfindungsgemäßen Kältemittelkompressors vorgesehen, dass eine Wandstärke des Dämpfungselementes zwischen 20% und 40%, vorzugsweise zwischen 25% und 35%, eines Innendurchmessers des zumindest einen als Schraubenfeder ausgebildeten Federelementes beträgt.

Dadurch kann eine optimale Geräuschdämpfung und gleichzeitig eine besonders stabile Anbindung des Federelementes an das als Lagerungselement und oder das als Verbindungselement ausgebildete Dämpfungselement erzielt werden.

### KURZE BESCHREIBUNG DER FIGUREN

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine Detailansicht eines Kältemittelkompressors mit erfindungsgemäß als Lagerungs- bzw. Verbindungselement ausgebildeten Dämpfungselementen
- Fig. 2: eine axonometrische Ansicht eines als Lagerungselement ausgebildeten Dämpfungselementes
- Fig. 3: die Schraubenfeder mit Dämpfungselement und Verbindungselement gemäß Fig. 1.
- Fig. 4: eine perspektivische Schnittansicht eines als Teil eines Lagerungselementes ausgebildeten Dämpfungselementes

### WEGE ZUR AUSFÜHRUNG DER ERFINDUNG

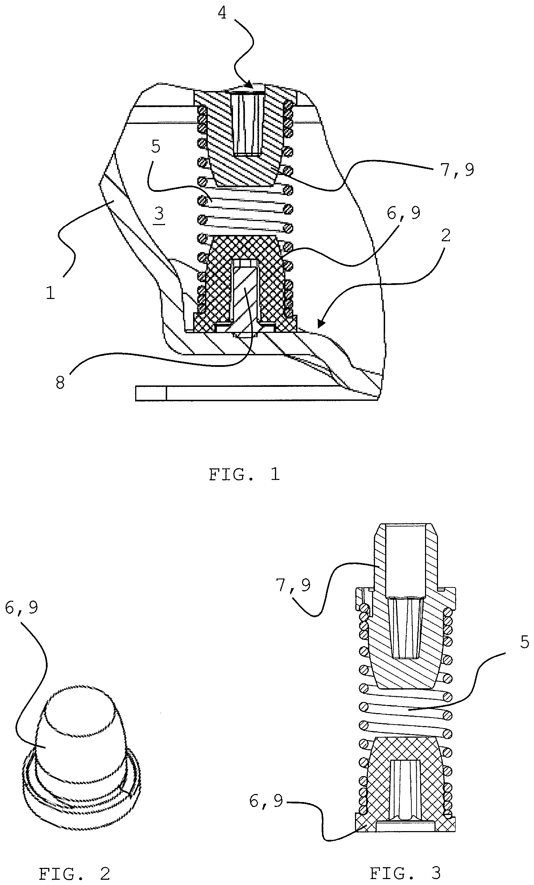

Fig. 1 zeigt eine Detailansicht eines Kompressorgehäuses 1 eines erfindungsgemäßen Kältemittelkompressors in einer Schnittansicht.

Die Schnittebene verläuft dabei mittig durch ein als Lagerungselement 6 ausgebildetes erstes Dämpfungselement 9, ein als Schraubenfeder ausgebildetes Federelement 5, über welches eine in einem Gehäuseinneren 3 des Kältemittelkompressors angeordnete Verdichter-Motor-Einheit 4 des Kältemittelkompressors elastisch an einer Innenseite 2 des Kompressorgehäuses 1 gelagert ist, sowie durch ein als Verbindungselement 7 ausgebildetes zweites Dämpfungselement 9, wobei das Federelement 5 über das Verbindungselement 7 an der Verdichter-Motor-Einheit 4 und über das Lagerungselement 6 an der Innenseite 2 des Kompressorgehäuses 1 angebunden ist.

In dem gezeigten Ausführungsbeispiel des erfindungsgemäßen Kältemittelkompressors ist die Verdichter-Motor-Einheit 4 nicht nur über das eine Federelement 5 sondern durch insgesamt vier, jeweils als eine Schraubenfeder ausgebildete Federelemente 5 an einem Bodenbereich des Kompressorgehäuses 1 gelagert.

In einem Betriebszustand des Kältemittelkompressors werden die durch die Verdichter-Motor-Einheit 4 hervorgerufenen Schwingungen hauptsächlich über die Federelemente 5 auf das Kompressorgehäuse 1 übertragen. Um den daraus resultierenden Geräuschpegel zu minimieren, ist es vorgesehen, dass das als Lagerungselement 6 ausgebildete Dämpfungselement 9 und/oder das als Verbindungselement 7 ausgebildete Dämpfungselement 9 aus einem Elastomer gefertigt ist. Durch die Wahl des Elastomers kann die akustische Übertragungsfunktion des Schwingungssystems bestehend aus der Verdichter-Motor-Einheit 4 und dem zumindest einen Federelement 5 derart beeinflusst werden, dass bestimmte Frequenzbereiche gezielt gedämpft bzw. unterdrückt werden können.

Insbesondere kann durch den Einsatz jeweils eines erfindungsgemäßen Dämpfungselementes 9 jeweils zwischen einem der vier Federelemente 5 und dem Kompressorgehäuse 1 bzw. der Verdichter-Motor-Einheit 4 des Kältemittelkompressors ein durch Kollisionen dieser Bauteile untereinander bedingter Geräuschpegel erheblich reduziert werden.

Da sich im Betriebszustand des Kältemittelkompressors üblicherweise ein Öl-Sumpf - bestehend aus Kältemittel und Öl - im Bodenbereich des Kältemittelkompressors ausbildet, sind zumindest die als Lagerungselemente 6 ausgebildeten Dämpfungselemente 9 meist zumindest teilweise von einem Schmiermittel-Öl-Gemisch umgeben, was grundsätzlich negative Auswirkungen auf die Lebensdauer des Elastomers hat, aus dem die Dämpfungselemente gefertigt sind. Um ein zu starkes Aufquellen oder gar ein Auflösen der Dämpfungselemente zu verhindern, sind die Dämpfungselemente 9 vorzugsweise aus einem Fluorelastomer umfassenden Verbundwerkstoff, beispielsweise aus einem Verbundwerkstoff mit der Handelsbezeichnung Viton®-A 401C, gefertigt.

Idealerweise erfolgt die Wahl des jeweils verwendeten Verbundwerkstoffes derart, dass die Dämpfungselemente bei Kontakt mit dem bis zu 100° heißen Öl-Sumpf leicht aufquellen, sodass eine kraftschlüssige Verbindung zwischen Federelement 5 und Lagerungs- bzw. Verbindungselement 6, 7 zu Stande kommt, ein Auflösen des Dämpfungselementes 9 über ausreichend große Lebensspannen des Kältemittelkompressors ausgeschlossen werden kann, und die Shore-A-Härte der Dämpfungselemente 9 einen Wert kleiner oder gleich 65 annimmt, da bei diesen Härten die optimale Geräuschdämpfung erzielt wird.

Aus den Fig. 2 und 3, wobei Fig. 2 das als Lagerungselement 6 ausgebildete Dämpfungselement 9 in axonometrischer Ansicht und Fig. 3 das als Schraubenfeder ausgebildete und mit einem Lagerungselement 6 sowie mit einem Verbindungselement 7 verbundene Federelement 5 darstellt, ist die kappenförmige Ausbildung des Lagerungselementes 6 bzw. des Verbindungselementes 7 besonders gut ersichtlich. Das Lagerungselement 6 umfasst dabei eine zylinderförmige Mantelfläche, eine diese Mantelfläche abschließende Deckenwand sowie einen an der der Deckenwand abgewandten Seite an die Mantelfläche anschließenden, abgesetzten Auflageabschnitt mit im Vergleich zu der zylinderförmigen Mantelfläche vergrößertem Außendurchmesser, wobei das Lagerungselement 6 mit dem abgesetzten Auflageabschnitt auf dem Bodenabschnitt aufliegt.

Das Lagerungselement 6 weist somit in seinem Inneren eine Aufnahme für einen am Bodenbereich des Kompressorgehäuses 1 angeordneten und meist einstückig mit dem Kompressorgehäuse 1 ausgebildeten Befestigungsbolzen 8 (siehe Fig. 1) auf. Im Einbauzustand des Lagerungselementes 6 ist dieses derart auf den Befestigungsbolzen 8 aufgestülpt, dass das Lagerungselement 6 den Befestigungsbolzen vollständig umschließt. Das Federelement 5 ruht dabei mit seinem einen Ende auf einer dem Federelement 5 zugewandten Seite des Auflageabschnittes und umgibt die zylinderförmige Mantelfläche des Lagerungselementes 6 umfangsseitig. Sowohl das Lagerungselement 6 selbst als auch der in der Aufnahme des Lagerungselementes 6 aufgenommene Befestigungsbolzen 8 ragen somit zumindest abschnittsweise in das Innere des als Schraubenfeder ausgebildeten Federelementes 5 hinein.

Das Verbindungselement 7, über welches das Federelement 5 im Betriebszustand des Kältemittelkompressors bzw. im Einbauzustand des Verbindungselementes 7 mit der Verdichter-Motor-Einheit 4 verbunden ist, weist im Wesentlichen den selben Aufbau wie das Lagerungselement 6 auf, wobei das Verbindungselement 7 ebenfalls kappenförmig ausgebildet ist und eine zylinderförmige Mantelfläche, eine diese Mantelfläche abschließende Deckenwand sowie einen abgesetzten Auflageabschnitt aufweist. Während das als Schraubenfeder ausgebildete Federelement 5 mit seinem anderen Ende die dem Federelement 5 zugewandten Seite des Auflageabschnittes des Verbindungselementes 7 kontaktiert und das Federelement 5 die zylinderförmige Mantelfläche des Verbindungselementes 7 umfangsseitig umgibt, steht ein hülsenförmiger Fortsatz vom Ablageabschnitt des Verbindungselementes 7 in Richtung der Verdichter-Motor-Einheit 4 ab, um mit der von der zylinderförmigen Mantelfläche umgebenen Aufnahme eine erweiterte Aufnahme des Verbindungselementes 7 auszubilden. In axialer Richtung des Verbindungselementes 7 betrachtet weist der hülsenförmige Fortsatz des Verbindungselementes 7 eine Längserstreckung auf, die im Wesentlichen derjenigen des aus zylinderförmiger Mantelfläche und Deckenwand gebildeten, in das Innere der Schraubenfeder hineinragenden Abschnittes des Verbindungselementes 7 gleicht. Somit kann das Verbindungselement 7 den stiftförmigen Fortsatz der Verdichter-Motor-Einheit 4 auch außerhalb des Federelements 5 umgeben, um auch dort einer Geräuschentwicklung entgegenzuwirken.

Im Einbauzustand des Verbindungselementes 7 ragt die Verdichter-Motor-Einheit 4 mit einem stiftförmigen Fortsatz in die erweiterte Aufnahme des Verbindungselementes 7 hinein und liegt die Verdichter-Motor-Einheit 4 auf einer der Verdichter-Motor-Einheit 4 zugewandten Seite des abgesetzten Auflageabschnittes auf dem Verbindungselement 7 auf.

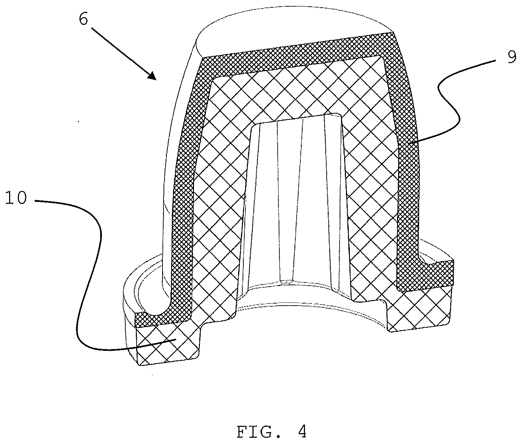

Fig. 4 zeigt eine andere Ausführungsvariante eines erfindungsgemäßen Dämpfungselementes 9. Dabei ist das Dämpfungselement 9 als ein Teil eines Lagerungselementes 6 ausgebildet. Als solches bildet das Dämpfungselement 9 einen Kontaktabschnitt des Lagerungselementes 6 aus, welcher Kontaktabschnitt im Betriebszustand des Kältemittelkompressors - und somit im Einbauzustand des Dämpfungselementes 9 - dem Federelement 5 zugewandt ist und mit diesem Federelement 5 in Kontakt steht.

Das Dämpfungselement 9 umhüllt dabei zumindest abschnittsweise ein formgebendes Innenelement 10 des Lagerungselementes 6, welches aus einem im Vergleich zu dem Dämpfungselement 9 härteren Material, beispielsweise aus Polyamid (PA), Polybutylenterephthalat (PBT), Ethylenchlortrifluorethylen (ECTFE), gefertigt ist.

Somit weisen sowohl das Dämpfungselement 9 selbst als auch das formgebende Innenelement 10 hülsenförmige Gestalt auf, sodass das formgebende Innenelement 10 auf den Befestigungsbolzen 8 aufgesetzt und das Dämpfungselement 9 über das formgebende Innenelement 10 übergestülpt werden kann.

Das Lagerungselement 6 dieser Ausführungsvariante kann entweder jeweils aus einem separaten Dämpfungselement 9 und einem formgebenden Innenelement 10 aufgebaut sein, wobei diese beiden Komponenten des Lagerungselementes 6 erst während des Einbauvorganges zusammengesetzt und im Betriebszustand des Kältemittelkompressors im Wesentlichen auf Grund des Federelementes 5 sowie auf Grund des Gewichtes der Verdichter-Motor-Einheit miteinander verbunden werden.

Alternativ kann das Lagerungselement 6 dieser Ausführungsvariante jedoch auch als ein Mehrstoff-Spritzgussteil ausgebildet sein, sodass das Dämpfungselement 9 bereits während des Herstellungsprozesses des Lagerungselementes 6 mit dem formgebenden Innenelement 10 verbunden wird.

Analog zum gerade beschriebenen Aufbau des Lagerungselementes 6 kann auch das Verbindungselement 7 ein formgebendes Innenelement und ein dieses zumindest abschnittsweise umhüllendes, einen Kontaktabschnitt ausbildendes Dämpfungselement umfassen und als ein Mehrstoff-Spritzgussteil ausgebildet sein.

### BEZUGSZEICHEN

1 Kompressorgehäuse
2 Innenseite des Kompressorgehäuses
3 Gehäuseinneres
4 Verdichter-Motor-Einheit
5 Federelement
6 Lagerungselement
7 Verbindungselement
8 Befestigungsbolzen
9 Dämpfungselement
10 Innenelement

## Patentansprüche

1. Kältemittelkompressor, umfassend ein hermetisch kapselbares Kompressorgehäuse (1) sowie eine in einem Gehäuseinneren (3) des Kompressorgehäuses (1) angeordnete Verdichter-Motor-Einheit (4), welche über zumindest ein Federelement (5) elastisch an einer Innenseite (2) des Kompressorgehäuses (1) gelagert ist, wobei zumindest ein aus einem Elastomer gefertigtes Dämpfungselement (9) vorgesehen ist, um die Übertragung von durch die Verdichter-Motor-Einheit (4) hervorgerufenen Schwingungen auf das Kompressorgehäuse (1) zu dämpfen, wobei das zumindest eine Dämpfungselement (9) zwischen dem zumindest einen Federelement (5) und der Innenseite (2) des Kompressorgehäuses (1) oder zwischen dem zumindest einen Federelement (5) und der Verdichter-Motor-Einheit (4) angeordnet ist, wobei das zumindest eine Dämpfungselement (9) aus einem im Vergleich zu Polyamid (PA), Polybutylenterephthalat (PBT), Ethylenchlortrifluorethylen (ECTFE) weicheren Elastomer gefertigt ist, wobei die Shore-A-Härte des Dämpfungselementes (9) einen Wert zwischen 40 und 80 aufweist, **dadurch gekennzeichnet, dass** das zumindest eine Dämpfungselement (9) aus einem Verbundwerkstoff umfassend Fluorelastomer, hydrierten Acrylnitrilbutadien-Kautschuk und/oder Ethylen-Acrylat-Kautschuk gefertigt ist.

2. Kältemittelkompressor nach Anspruch 1, **dadurch gekennzeichnet, dass** die Shore-A-Härte des Dämpfungselementes (9) einen Wert zwischen 50 und 65, besonders bevorzugt zwischen 55 und 60, aufweist.

3. Kältemittelkompressor nach einem der Ansprüche 1 bis 2, **dadurch gekennzeichnet, dass** das zumindest eine Dämpfungselement (9) als ein Lagerungselement (6) oder als ein Teil eines Lagerungselementes (6) ausgebildet ist, über welches Lagerungselement (6) das zumindest eine Federelement (5), vorzugsweise mittels Kraftschluss, an der Innenseite (2) des Kompressorgehäuses (1) angebunden ist.

4. Kältemittelkompressor nach einem der Ansprüche 1 bis 3, **dadurch gekennzeichnet, dass** das zumindest eine Dämpfungselement (9) als Verbindungselement (7) oder als ein Teil eines Verbindungselementes (7) ausgebildet ist, über welches Verbindungselement (7) das zumindest eine Federelement (5), vorzugsweise mittels Kraftschluss, an der Verdichter-Motor-Einheit (4) angebunden ist.

5. Kältemittelkompressor nach Anspruch 3 oder 4, **dadurch gekennzeichnet, dass** das Lagerungselement (6) und/oder das Verbindungselement (7) jeweils ein formgebendes Innenelement (10) sowie ein einen Kontaktabschnitt des Lagerungselementes (6) bzw. des Verbindungselementes (7) ausbildendes Dämpfungselement (9) umfasst.

6. Kältemittelkompressor nach Anspruch 5, **dadurch gekennzeichnet, dass** das Dämpfungselement (9) das Innenelement (10) an seiner dem Federelement zugewandten Außenseite umhüllt.

7. Kältemittelkompressor nach Anspruch 5 oder 6, **dadurch gekennzeichnet, dass** das Lagerungselement (6) und/oder das Verbindungselement (7) als ein Mehrstoff-Spritzgussteil ausgebildet ist.

8. Kältemittelkompressor nach einem der Ansprüche 3 bis 7, **dadurch gekennzeichnet, dass** das zumindest eine Federelement (5) als Schraubenfeder ausgebildet ist und das zumindest eine Dämpfungselement (9) zumindest abschnittsweise in die Schraubenfeder hineinragt.

9. Kältemittelkompressor nach einem der vorhergehenden Ansprüche, **dadurch gekennzeichnet, dass** die Verdichter-Motor-Einheit (4) über vier als Schraubenfedern ausgebildete Federelemente (5) an der Innenseite (2) des Kompressorgehäuses (1) gelagert ist, wobei jede Schraubenfeder über zumindest ein Dämpfungselement (9) mit der Verdichter-Motor-Einheit (4) und/oder der Innenseite (2) des Kompressorgehäuses (1) verbunden ist.

10. Kältemittelkompressor nach einem der Ansprüche 3 bis 9, **dadurch gekennzeichnet, dass** das zumindest eine Dämpfungselement kappenförmig ausgebildet ist.

11. Kältemittelkompressor nach Anspruch 10 und Anspruch 8 oder 9, **dadurch gekennzeichnet, dass** eine Wandstärke des Dämpfungselementes (9) zwischen 20% und 40%, vorzugsweise zwischen 25% und 35%, eines Innendurchmessers des zumindest einen als Schraubenfeder ausgebildeten Federelementes (5) beträgt.

## Claims

1. Refrigerant compressor comprising a hermetically sealable compressor housing (1) and a compressor-motor unit (4) disposed in a housing interior (3) of the compressor housing (1), which is elastically mounted on an inner side (2) of the compressor housing (1) via at least one spring element (5), wherein at least one damping element (9) made of an elastomer is provided in order to dampen the transmission of vibrations caused by the compressor-motor unit (4) to the compressor housing (1), wherein the at least one damping element (9) is disposed between the at least one spring element (5) and the inner side (2) of the compressor housing (1) or between the at least one spring element (5) and the compressor-motor unit (4), wherein the at least one damping element (9) is made of an elastomer that is softer than polyamide (PA), polybutylene terephthalate (PBT), and ethylene chlorotrifluoroethylene (ECTFE), wherein the Shore A hardness of the damping element (9) has a value between 40 and 80, **characterized in that** the at least one damping element (9) is made of a composite material comprising a fluoroelastomer, hydrogenated acrylonitrile butadiene rubber and/or ethylene acrylate rubber.

2. Refrigerant compressor as in Claim 1, **characterized in that** the Shore A hardness of the damping element (9) has a value between 50 and 65, especially hardness between 55 and 60.

3. Refrigerant compressor as in one of Claims 1 to 2, **characterized in that** the at least one damping element (9) is in the form of a mounting element (6) or as a part of a mounting element (6), via which mounting element (6) the at least one spring element (5) is attached to the inner side (2) of the compressor housing (1), preferably via a force fit.

4. Refrigerant compressor as in one of Claims 1 to 3, **characterized in that** the at least one damping element (9) is in the form of a connecting element (7) or as a part of a connecting element (7), via which connecting element (7) the at least one spring element (5) is attached to the compressor-motor unit (4), preferably by a force fit.

5. Refrigerant compressor as in Claim 3 or 4, **characterized in that** the mounting element (6) and/or the connecting element (7) each comprises a shape-giving inner element (10) and a damping element (9) forming a contact segment of the mounting element (6) or the connecting element (7).

6. Refrigerant compressor as in Claim 5, **characterized in that** the damping element (9) surrounds the inner element (10) on its outer side that is turned toward the spring element.

7. Refrigerant compressor as in Claim 5 or 6, **characterized in that** the mounting element (6) and/or the connecting element (7) is in the form of a multicomponent injection molded part.

8. Refrigerant compressor as in one of Claims 3 to 7, **characterized in that** the at least one spring element (5) is in the form of a helical spring and the at least one damping element (9) projects, at least in a segment, into the helical spring.

9. Refrigerant compressor as in one of the preceding claims, **characterized in that** the compressor-motor unit (4) is mounted on the inner side (2) of the compressor housing (1) via four spring elements (5) in the form of helical springs, wherein each helical spring is connected to the compressor-motor unit (4) and/or the inner side (2) of the compressor housing (1) via at least one damping element (9).

10. Refrigerant compressor as in one of Claims 3 to 9, **characterized in that** the at least one damping element is made in the shape of a cap.

11. Refrigerant compressor as in Claim 10 and Claim 8 or 9, **characterized in that** a wall thickness of the damping element (9) is between 20% and 40%, preferably between 25% and 35%, of an inside diameter of the at least one spring element (5) in the form of a helical spring.

## Revendications

1. Compresseur de réfrigérant, comprenant un carter de compresseur (1) pouvant être encapsulé hermétiquement et une unité moteur-compresseur (4) qui est disposée dans un espace intérieur (3) du carter de compresseur (1) et qui est montée de manière élastique sur un côté intérieur (2) du carter de compresseur (1) par l'intermédiaire d'au moins un élément élastique (5), dans lequel au moins un élément d'amortissement (9) constitué d'un élastomère est prévu pour amortir la transmission de vibrations provoquées par l'unité moteur-compresseur (4) au carter de compresseur (1), dans lequel ledit au moins un élément d'amortissement (9) est disposé entre ledit au moins un élément élastique (5) et le côté intérieur (2) du carter de compresseur (1) ou entre ledit au moins un élément élastique (5) et l'unité moteur-compresseur (4), dans lequel ledit au moins un élément d'amortissement (9) est constitué d'un élastomère plus souple que le polyamide (PA), le polybutylène téréphtalate (PBT), l'éthylène chlorotrifluoroéthylène (ECTFE), dans lequel la dureté Shore A de l'élément d'amortissement (9) présente une valeur comprise entre 40 et 80, **caractérisé en ce que** ledit au moins un élément d'amortissement (9) est constitué d'un matériau composite comprenant un élastomère fluoré, un caoutchouc acrylonitrile-butadiène hydrogéné et/ou un caoutchouc éthylène-acrylate.

2. Compresseur de réfrigérant selon la revendication 1, **caractérisé en ce que** la dureté Shore A de l'élément d'amortissement (9) présente une valeur comprise entre 50 et 65, de manière particulièrement préférée entre 55 et 60.

3. Compresseur de réfrigérant selon l'une des revendications 1 à 2, **caractérisé en ce que** ledit au moins un élément d'amortissement (9) est réalisé sous la forme d'un élément de support (6) ou d'une partie d'un élément de support (6), par lequel élément de support (6) ledit au moins un élément élastique (5) est relié au côté intérieur (2) du carter de compresseur (1), de préférence au moyen d'une liaison à force.

4. Compresseur de réfrigérant selon l'une des revendications 1 à 3, **caractérisé en ce que** ledit au moins un élément d'amortissement (9) est réalisé sous la forme d'un élément de liaison (7) ou d'une partie d'un élément de liaison (7), par lequel élément de liaison (7) ledit au moins un élément élastique (5) est relié à l'unité moteur-compresseur (4), de préférence au moyen d'une liaison à force.

5. Compresseur de réfrigérant selon la revendication 3 ou 4, **caractérisé en ce que** l'élément de support (6) et/ou l'élément de liaison (7) comprennent chacun un élément intérieur de mise en forme (10) ainsi qu'un élément d'amortissement (9) formant une section de contact de l'élément de support (6) ou de l'élément de liaison (7).

6. Compresseur de réfrigérant selon la revendication 5, **caractérisé en ce que** l'élément d'amortissement (9) enveloppe l'élément intérieur (10) sur son côté extérieur tourné vers l'élément élastique.

7. Compresseur de réfrigérant selon la revendication 5 ou 6, **caractérisé en ce que** l'élément de support (6) et/ou l'élément de liaison (7) sont réalisés sous la forme d'une pièce moulée par injection composite.

8. Compresseur de réfrigérant selon l'une des revendications 3 à 7, **caractérisé en ce que** ledit au moins un élément élastique (5) est réalisé sous la forme d'un ressort hélicoïdal et ledit au moins un élément d'amortissement (9) pénètre au moins sur certaines parties dans le ressort hélicoïdal.

9. Compresseur de réfrigérant selon l'une des revendications précédentes, **caractérisé en ce que** l'unité moteur-compresseur (4) est montée sur le côté intérieur (2) du carter de compresseur (1) par l'intermédiaire de quatre éléments élastiques (5) réalisés sous la forme de ressorts hélicoïdaux, chaque ressort hélicoïdal étant relié à l'unité moteur-compresseur (4) et/ou au côté intérieur (2) du carter de compresseur (1) par l'intermédiaire d'au moins un élément d'amortissement (9).

10. Compresseur de réfrigérant selon l'une des revendications 3 à 9, **caractérisé en ce que** ledit au moins un élément d'amortissement est réalisé en forme de coiffe.

11. Compresseur de réfrigérant selon la revendication 10 et la revendication 8 ou 9, **caractérisé en ce qu'**une épaisseur de paroi de l'élément d'amortissement (9) est comprise entre 20 % et 40 %, de préférence entre 25 % et 35 %, d'un diamètre intérieur dudit au moins un élément élastique (5) réalisé sous la forme d'un ressort hélicoïdal.
